# FASCICULE DE BREVET EUROPEEN

(11) **EP 0 718 190 B1**
(45) Date de publication et mention de la délivrance du brevet: **10.06.1998**
(21) Numéro de dépôt: 95402837.9
(22) Date de dépôt: 15.12.1995
(51) Int. Cl.: B64D 33/04, F02K 1/82

(54) **Perfectionnements aux hélicoptères équipés de dilueurs-déviateurs de jet pour les gaz de combustion**
Verbesserung an, mit einer Strahlmisch- und -Umlenkvorrichtung für Verbrennungsabgase ausgerüstete, Hubschrauber
Improvements for helicopters equipped with a jet dilution and deviation device for combustion gases

(30) Priorité: 19.12.1994 FR 9415243
(43) Date de publication de la demande: 26.06.1996
(73) Titulaire: EUROCOPTER, F-13725 Marignane Cédex (FR)
(72) Inventeur: Lavergne, Michel, F-13015 Marseille (FR); Bosqui, Olivier, F-13480 Cabries (FR); Allemand, Robert, F-13300 Salon de Provence (FR)
(74) Mandataire: Burbaud, Eric

(56) Documents cités:
- DE-A- 3 129 305
- FR-A- 2 338 380
- FR-A- 2 508 412
- US-A- 3 540 680
- US-A- 3 930 627
- US-A- 4 136 518

## Description

La présente invention est relative aux hélicoptères équipés de dilueurs-déviateurs de jets pour les gaz de combustion, et notamment aux hélicoptères militaires dont on cherche à augmenter la discrétion vis-à-vis des systèmes de détection, notamment des systèmes de détection thermique ou des systèmes de détection laser par rétrodiffusion des particules dans l'atmosphère.

Plus particulièrement, l'invention s'applique aux hélicoptères d'attaque au sol destinés à voler à très basse altitude en vol tactique pour profiter des masques naturels ou artificiels tels que reliefs du sol, arbres, ou constructions.

En vol tactique à très basse altitude, les menaces qui peuvent concerner ces hélicoptères proviennent presque exclusivement de la demi-sphère supérieure, puisque ces menaces sont constituées notamment par des hélicoptères d'interception volant en général à plus haute altitude ou par des systèmes antiaériens sol/air susceptibles de repérer et d'attaquer selon une direction sensiblement horizontale les hélicoptères volant à très basse altitude.

Il est donc essentiel que les hélicoptères en question soient difficilement détectables depuis le haut ou selon une direction sensiblement horizontale.

Dans ce but, il est connu d'équiper la ou les tuyères d'échappement de ces hélicoptères avec des ensembles dilueurs-déviateurs de jet qui d'une part mélangent les gaz de combustion issus de la tuyère avec de l'air frais et d'autre part dévient le mélange ainsi réalisé vers le bas, de façon à rendre plus difficile la détection de l'hélicoptère depuis la demi-sphère supérieure, notamment par des moyens thermiques ou par rétrodiffusion laser.

Ainsi, le jet de gaz de combustion chaud issu de la tuyère bénéficie des masques naturels ou artificiels fournis par les reliefs du sol, la végétation ou les constructions, de sorte qu'il est difficilement détectable.

D'autre part, les gaz de combustion n'échauffent pas les pales du rotor principal ni le fuselage de l'hélicoptère, ce qui diminue également la signature thermique de l'hélicoptère.

Enfin, les gaz de combustion chaud tendent à échauffer le sol sous l'hélicoptère, ce qui, lorsqu'un missile se dirige vers l'hélicoptère depuis le haut, est susceptible de créer un leurre pour ce missile, puisque l'hélicoptère s'éloigne dès qu'il a repéré l'approche du missile.

Un exemple d'hélicoptère équipé d'un tel déviateur de jet est constitué par l'hélicoptère russe MIL MI-28 HAVOC.

Cet hélicoptère comporte au moins un moteur à turbine à gaz qui entraîne au moins un rotor principal et qui présente une tuyère pour l'échappement des gaz de combustion, un conduit d'éjection entourant ladite tuyère et s'étendant vers l'aval au-delà de cette tuyère en formant un coude vers le bas qui débouche dans l'atmosphère par au moins une sortie ouverte essentiellement vers le bas, le conduit d'éjection comportant au moins une entrée d'air qui communique avec l'atmosphère et qui est conformée pour aspirer de l'air ambiant dans le conduit d'éjection sous l'effet des gaz de combustion sortant de la tuyère.

Un autre exemple d'hélicoptère équipé d'un déviateur de jet assez voisin est divulgué dans le document DE-C-31 29 305, bien que la sortie du conduit d'éjection de cet hélicoptère soit dans ce cas ouverte essentiellement vers l'arrière, ce qui est défavorable vis-à-vis de la détection horizontale de l'hélicoptère et ce qui supprime l'effet de leurre susmentionné.

L'ensemble dilueur-déviateur de jet qui équipe l'hélicoptère MIL MI-28 HAVOC susmentionné présente toutefois l'inconvénient que son conduit d'éjection est directement exposé à l'extérieur du fuselage, de sorte que ce conduit, sous l'effet de l'échauffement dû aux gaz de combustion, peut avoir une signature thermique relativement importante susceptible de diminuer la discrétion de l'hélicoptère.

La présente invention a notamment pour but de palier cet inconvénient.

A cet effet, selon l'invention, un hélicoptère du genre défini ci-dessus est essentiellement caractérisé en ce que, vu horizontalement depuis l'extérieur de l'hélicoptère ou depuis une position située au-dessus de l'hélicoptère, le conduit d'éjection est masqué entièrement par un carénage séparé dudit conduit d'éjection par un espace intermédiaire, des moyens d'alimentation en air étant prévus pour créer un flux d'air ambiant, y compris en vol stationnaire, le long dudit espace intermédiaire jusqu'à au moins une sortie qui est située au niveau de la sortie du conduit d'éjection et qui est également ouverte essentiellement vers le bas.

Ainsi, seul le carénage qui entoure le conduit d'éjection est visible depuis l'extérieur, et ce carénage ne subit pratiquement pas d'échauffement grâce au flux d'air frais généré dans l'espace intermédiaire laissé libre entre ledit carénage et le conduit d'éjection, ce qui diminue notablement la signature thermique de l'hélicoptère.

Dans des modes de réalisation préférés, on a recours en outre à l'une et/ou à l'autre des dispositions suivantes :
- l'espace intermédiaire susmentionné entoure le conduit d'éjection, lequel n'est soutenu que localement par des organes de support qui traversent l'espace intermédiaire sensiblement sans interférer avec le flux d'air ambiant qui parcourt cet espace intermédiaire ; on évite ainsi des transferts de chaleur depuis le conduit d'éjection vers d'autres parties de l'hélicoptère, ce qui participe à la discrétion thermique dudit hélicoptère ;
- le carénage qui masque le conduit d'éjection comporte une partie exposée à l'air ambiant soufflé vers le bas par le rotor principal, et les moyens d'alimentation en air de l'espace intermédiaire comportent des ouïes ménagées dans ladite partie du carénage exposée à l'air ambiant soufflé par le rotor principal, ces ouïes étant conformées pour faire entrer dans l'espace intermédiaire une partie dudit air ambiant soufflé par le rotor principal ;
- chaque ouïe comporte une fente ménagée dans le carénage selon une direction longitudinale sensiblement transversale par rapport à l'écoulement le long dudit carénage de l'air ambiant soufflé par le rotor principal, chaque fente comportant un bord d'aval qui est relié à un déflecteur tout le long de ladite fente, ce déflecteur s'étendant vers l'amont en s'éloignant du carénage vers l'extérieur et en recouvrant toute la fente, chaque ouïe constituant ainsi une chicane qui empêche une vision directe de la tuyère et du conduit d'éjection depuis l'extérieur ;
- les ouïes sont ouvertes vers l'avant dudit hélicoptère ;
- les moyens d'alimentation en air de l'espace intermédiaire comportent au moins un ventilateur pour propulser de l'air ambiant dans ledit espace intermédiaire ;
- l'entrée d'air du conduit d'éjection comporte des ailettes transversales qui empêchent une vision directe vers l'intérieur de ladite entrée d'air ;
- le conduit d'éjection comporte intérieurement des déflecteurs pour contrôler la direction du flux gazeux sortant dudit conduit d'éjection ;
- l'hélicoptère comporte une cellule principale qui inclut deux moteurs à turbine à gaz juxtaposés et qui se prolonge vers l'arrière par une poutre de queue s'étendant jusqu'à un rotor anticouple, ce rotor anticouple étant entraîné en rotation par un arbre de transmission qui s'étend longitudinalement à l'intérieur de la poutre de queue, l'hélicoptère comportant deux conduits d'éjection de part et d'autre de l'arbre de transmission ;
- les deux conduits d'éjection traversent la poutre de queue et ont leur sortie disposée sous ladite poutre de queue ;
- les deux conduits d'éjection sont entourés chacun par un espace intermédiaire parcouru par un flux d'air ambiant, les deux espaces intermédiaires présentant une portion commune dans toute leur zone comprise entre les deux conduits d'éjection, et la sortie des deux espaces intermédiaires étant également commune entre les sorties des deux conduits d'éjection ;
- les deux conduits d'éjection sont disposés à l'extérieur de la poutre de queue, de part et d'autre de celle-ci ;
- les sorties des deux conduits d'éjection sont disposés latéralement par rapport à la poutre de queue, et la poutre de queue comporte des moyens de circulation forcée d'air ambiant disposés de part et d'autre de la poutre de queue au niveau des sorties respectives des deux conduits d'éjection, pour éloigner de la poutre de queue le flux sortant des conduits d'éjection, ce qui évite l'échauffement de la poutre de queue à la sortie du conduit d'éjection et permet ainsi une meilleure discrétion thermique de l'hélicoptère ;
- l'hélicoptère comporte une cellule principale qui inclut un moteur à turbine à gaz unique et qui se prolonge vers l'arrière par une poutre de queue s'étendant jusqu'à un rotor anticouple, ce rotor anticouple étant entraîné en rotation par un arbre de transmission qui s'étend longitudinalement à l'intérieur de la poutre de queue, le conduit d'éjection comportant une portion d'amont qui s'étend au-dessus de l'arbre de transmission et qui se prolonge vers l'arrière et vers le bas par deux portions d'aval disposées respectivement de part et d'autre de l'arbre de transmission ;
- la tuyère est ondulée circonférentiellement en formant une pluralité de lobes qui s'étendent radialement ;
- l'hélicoptère comporte des moyens pour forcer la circulation de l'air ambiant vers le conduit d'éjection.

D'autres caractéristiques et avantages de l'invention apparaîtront au cours de la description détaillée suivante de plusieurs de ses formes de réalisation, données à titre d'exemples non limitatifs, en regard des dessins joints.

Sur les dessins :
- la figure 1 est une vue en élévation représentant un hélicoptère selon une forme de réalisation de l'invention en vol tactique,
- la figure 2 est une vue de détail en élévation, partiellement écorchée, de l'hélicoptère de la figure 1, montrant un des ensembles dilueurs-déviateurs de jet de cet hélicoptère,
- la figure 2A est une vue de détail de la figure 2, montrant une des ouïes de refroidissement de l'ensemble dilueur-déviateur de jet de la figure 2,
- la figure 3 est une vue de dessus correspondant à la figure 2,
- les figures 4, 5, 6 sont des vues en coupe respectivement selon les lignes IV-IV, V-V et VI-VI de la figure 2,
- la figure 7 est une vue analogue à la figure 2, pour une autre forme de réalisation de l'invention,
- la figure 8 est une vue analogue à la figure 3, pour la forme de réalisation de la figure 7,
- les figures 9 et 10 sont des vues en coupe respectivement selon les lignes IX-IX et X-X de la figure 7,
- les figures 11 et 12 sont des vues schématiques partielles, respectivement en élévation et de dessus, d'un hélicoptère selon une autre forme de réalisation de l'invention,
- et les figures 13 et 14 sont des vues schématiques partielles, respectivement en élévation partiellement écorchée et de dessus, d'un hélicoptère selon encore une autre forme de réalisation de l'invention.

Sur les différentes figures, les mêmes références désignent des éléments identiques ou similaires.

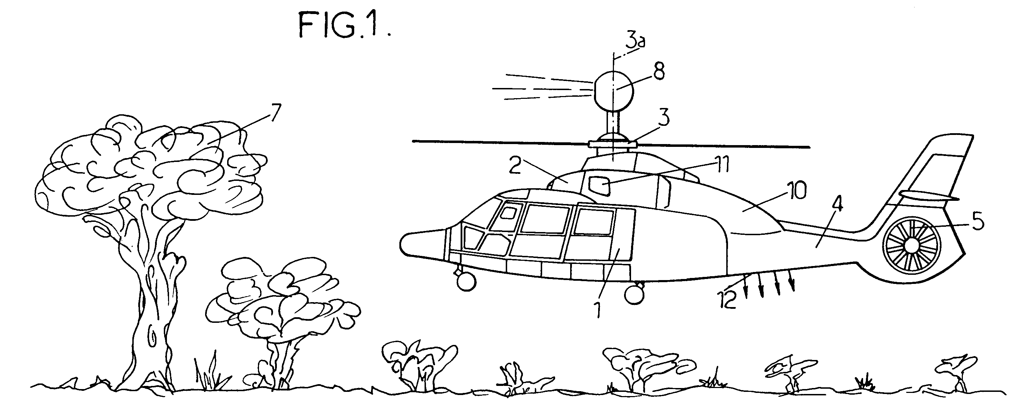

L'hélicoptère représenté sur la figure 1 comporte classiquement une cellule 1 qui inclut entre autres deux turbines à gaz 2 juxtaposées entraînant un rotor principal 3 rotatif autour d'un axe 3a qui est sensiblement vertical dans la position normale de l'hélicoptère.

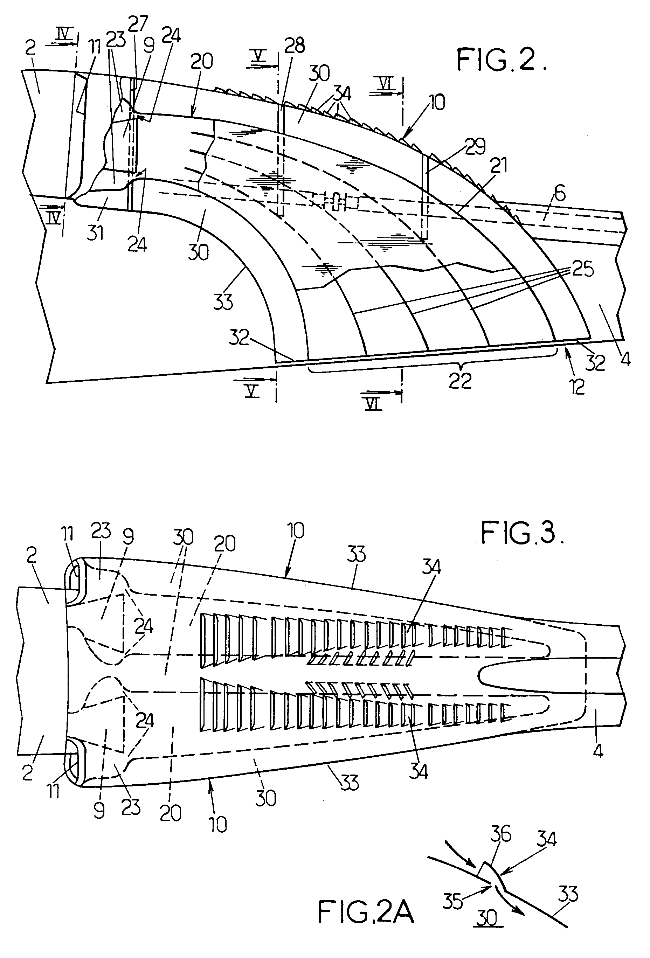

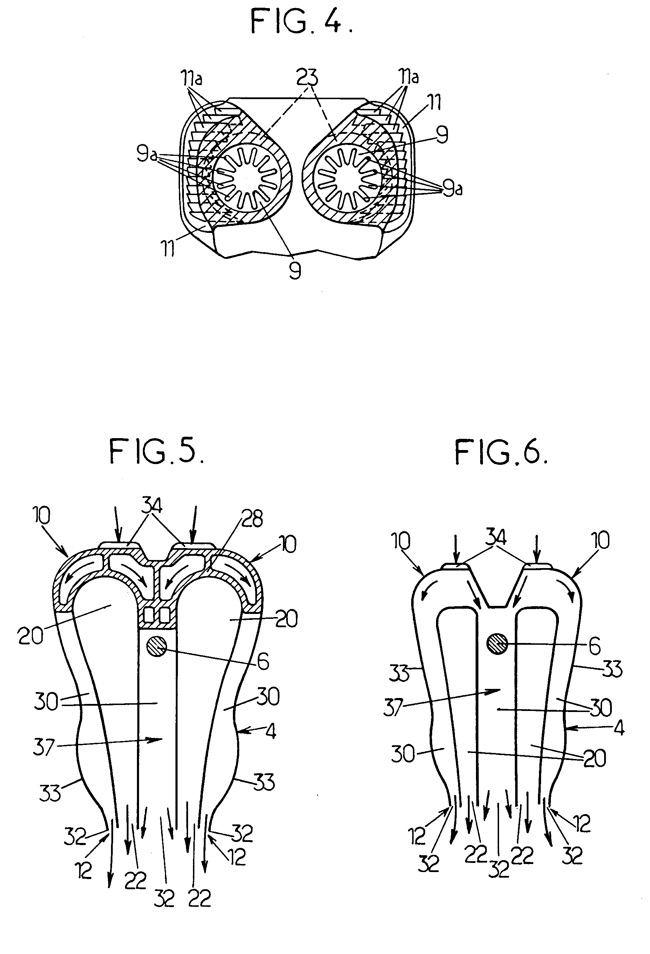

Chaque moteur à turbine à gaz 2 est prolongé vers l'arrière par une tuyère 9 pour l'échappement des gaz de combustion (voir figure 2). Avantageusement, cette tuyère peut présenter des ondulations circonférentielles qui forment une pluralité de lobes 9a s'étendant radialement (voir figure 4), comme expliqué par exemple dans le document FR-A-2 515 735. Ce type de tuyère est connu sous le nom de tuyère "marguerite".

A partir de la cellule 1, une poutre de queue 4 s'étend vers l'arrière et inclut à son extrémité arrière un rotor anticouple 5.

Le rotor anticouple 5 est entraîné en rotation au moyen d'un arbre de transmission 6 (figure 2) qui s'étend longitudinalement dans la poutre de queue 4, depuis le réducteur principal ou boîte de transmission principale disposée près de la source de puissance, jusqu'au rotor arrière 5.

L'hélicoptère représenté sur la figure 1 est spécialement destiné à voler à très basse altitude en vol tactique, de façon à s'abriter derrière les masques du paysage tels que des arbres 7 ou autres.

Avantageusement, cet hélicoptère peut être équipé d'un viseur périscopique 8 centré sur l'axe du rotor principal 3 et s'étendant au-dessus de ce rotor principal, ou encore d'un viseur de toit, de façon que l'équipage de l'hélicoptère puisse faire des observations et préparer l'armement de l'hélicoptère tout en restant à couvert derrière les arbres 7 ou autres.

Afin d'optimiser la discrétion de l'hélicoptère notamment vis-à-vis des moyens de détection thermique ou par rétrodiffusion laser, chaque moteur à turbine à gaz 2 est doté d'un ensemble dilueur-déviateur de jet 10 qui est pourvu d'une entrée d'air 11 pour mélanger de l'air frais aux gaz de combustion sortant du moteur à turbine à gaz et pour diriger le mélange ainsi réalisé jusqu'à une sortie 12 ouverte vers le bas sensiblement parallèlement à l'axe 3a du rotor principal.

Autrement dit, la sortie 12 du conduit d'éjection est sensiblement comprise dans un plan dont la normale forme un angle relativement faible avec l'axe 3a du rotor, de sorte que cette normale forme un angle relativement faible avec la verticale lorsque l'hélicoptère est dans sa position la plus courante. Le flux de gaz issu de la sortie 12 est dirigé vers le bas, mais pas forcément exactement selon une verticale.

Cette disposition présente l'avantage d'éviter la recirculation des gaz d'échappement vers les entrées d'air des moteurs à turbine à gaz, puisque la sortie 12 est éloignée de ces entrées d'air, généralement en partie supérieure de la cellule 1.

Comme on peut le voir plus en détail sur les figures 2 à 6, chaque ensemble dilueur-déviateur de jet 10 comporte un conduit d'éjection 20 qui entoure la tuyère 9 correspondante et qui s'étend vers l'arrière au-delà de cette tuyère en divergeant et en formant un coude 21 qui traverse la poutre de queue 4 vers le bas, les deux conduits d'éjection 20 passant de part et d'autre de l'arbre de transmission.

Chaque conduit d'éjection débouche dans l'atmosphère sous la poutre de queue par une sortie 22 ouverte vers le bas sensiblement parallèlement à l'axe 3a du rotor principal.

Autrement dit, la sortie 22 du conduit d'éjection est sensiblement comprise dans un plan dont la normale forme un angle relativement faible avec l'axe 3a du rotor, de sorte que cette normale forme un angle relativement faible avec la verticale lorsque l'hélicoptère est dans sa position la plus courante.

Chaque conduit d'éjection 20 présente une section sensiblement circulaire juste en aval de la tuyère 9 correspondante, et sa section évolue continûment vers l'aval jusqu'à une section sensiblement rectangulaire vers sa sortie 22.

Le conduit d'éjection 20 associé à chaque tuyère 9 est prévu pour aspirer de l'air frais par l'entrée d'air 11 correspondant à cette tuyère.

Dans l'exemple représenté sur les dessins, l'entrée d'air 11, associée à une tuyère 9 appartenant à l'un des moteurs à turbine à gaz, est disposée latéralement par rapport à cette tuyère, sur le côté de ladite tuyère qui est le plus éloigné de la tuyère 9 appartenant à l'autre moteur à turbine a gaz.

Chaque entrée d'air est équipée d'ailettes lla disposées transversalement de façon à éviter une vue directe vers l'intérieur de ladite entrée d'air depuis l'extérieur de l'hélicoptère, afin de limiter la signature thermique de l'hélicoptère.

En outre, chaque entrée d'air 11 communique avec une volute 23 disposée autour de la tuyère 9 correspondante, laquelle volute communique avec le reste du conduit d'éjection 20 par l'intermédiaire d'un étranglement annulaire 24 qui entoure l'extrémité arrière de la tuyère 9 et par lequel est aspiré de l'air frais, par effet de trompe, sous l'effet de l'injection des gaz de combustion par la tuyère 9.

Ainsi, l'air frais qui entre dans le conduit d'éjection 20 se mélange aux gaz de combustion issus de la tuyère 9, et ceci de façon particulièrement efficace lorsque la tuyère 9 a une forme dite "en marguerite", comme défini précédemment.

Le flux gazeux qui s'écoule dans le conduit d'éjection 20 présente donc une température inférieure à la température des gaz de combustion sortant de la tuyère 9.

Afin de garantir une bonne homogénéité en température du flux gazeux qui s'écoule dans le conduit d'éjection 20 et une bonne maîtrise de la direction de ce flux gazeux, des déflecteurs 25 peuvent avantageusement être prévus dans le conduit d'éjection 20. Chaque déflecteur 25 s'étend depuis une extrémité d'amont située à une certaine distance en aval de la tuyère 9 jusqu'à une extrémité d'aval située au niveau de la sortie 22 du conduit d'éjection, et chaque déflecteur suit la forme générale du conduit d'éjection.

Par ailleurs, afin d'éviter que l'échauffement des deux conduits d'éjection 20 ne détériore la signature thermique de l'hélicoptère, chacun de ces conduits est entièrement compris à l'intérieur d'un espace intermédiaire libre 30 qui entoure ce conduit d'éjection et qui s'étend depuis une extrémité d'amont 31 voisine de la tuyère 9, jusqu'à une sortie 32 située au niveau de la sortie 22 du conduit d'éjection.

Comme la sortie 22, la sortie 32 est ouverte vers le bas sensiblement parallèlement à l'axe 3a du rotor principal.

Autrement dit, la sortie 32 est sensiblement comprise dans un plan dont la normale forme un angle relativement faible avec l'axe 3a du rotor, donc un angle relativement faible avec la verticale dans la position la plus courante de l'hélicoptère.

Chaque espace intermédiaire 30 est délimité vers l'extérieur de l'hélicoptère par un carénage 33 dont la partie dorsale est équipée d'une pluralité d'ouïes 34 qui sont conformées pour faire entrer dans l'espace intermédiaire une partie de l'air ambiant soufflé vers le bas par le rotor principal.

Plus précisément, comme représenté sur la figure 2A, chaque ouïe 34 se compose d'une fente 35 qui s'étend longitudinalement dans une direction sensiblement transversale par rapport à la direction d'écoulement de l'air ambiant soufflé par le rotor principal le long du carénage 33.

Un déflecteur 36 est relié continûment au bord d'aval de la fente 35 sur toute la longueur de ladite fente, et ce déflecteur 36 s'étend vers l'amont dans le sens de l'écoulement de l'air ambiant soufflé par le rotor principal, donc partiellement vers l'avant de l'hélicoptère, en s'éloignant du carénage vers l'extérieur de l'espace intermédiaire 30 et en recouvrant toute la fente. Ainsi, les ouïes 34 forment des chicanes qui empêchent une vision directe depuis l'extérieur des parties chaudes que sont les tuyères 9 et le conduit d'éjection 20, ce qui contribue à réduire la signature thermique de l'hélicoptère. Les ouïes 34 peuvent avantageusement être ouvertes vers l'avant de l'appareil où les capotages de la boîte de transmission principale et du mât du rotor principal forment un masque vis-à-vis de la vision extérieure de ces parties chaudes.

Les déflecteurs 36 ont donc une forme d'écope qui dirige dans les fentes 35 l'air soufflé par le rotor principal, et éventuellement l'air en déplacement relatif par rapport à l'hélicoptère lors des mouvements de l'hélicoptère.

Grâce au flux d'air frais qui entre dans l'espace intermédiaire 30 et qui parcourt cet espace intermédiaire jusqu'à sa sortie 32, la chaleur communiquée aux parois du conduit d'éjection 20 par les gaz de combustion n'est pas transmise au carénage 33, ni au reste du fuselage de l'hélicoptère, ce qui contribue à la faible signature thermique de l'hélicoptère.

Comme représenté en particulier sur les figures 2 et 5, afin de limiter les ponts thermiques entre le conduit d'éjection 20 et le carénage 33 ou une autre partie de l'hélicoptère, le conduit d'éjection 20 est soutenu uniquement localement par des cadres rigides 27, 28, 29 ajourés qui traversent l'espace intermédiaire 30 sensiblement sans interférer avec le flux d'air frais qui parcourt cet espace intermédiaire.

Comme on peut le voir sur les figures 5 et 6, dans l'exemple particulier considéré ici, les espaces intermédiaires 30 correspondant aux deux conduits d'éjection 20 comportent une partie centrale commune 37 entre les deux conduits d'éjection 20, cette partie centrale étant traversée par l'arbre de transmission 6 du rotor anticouple.

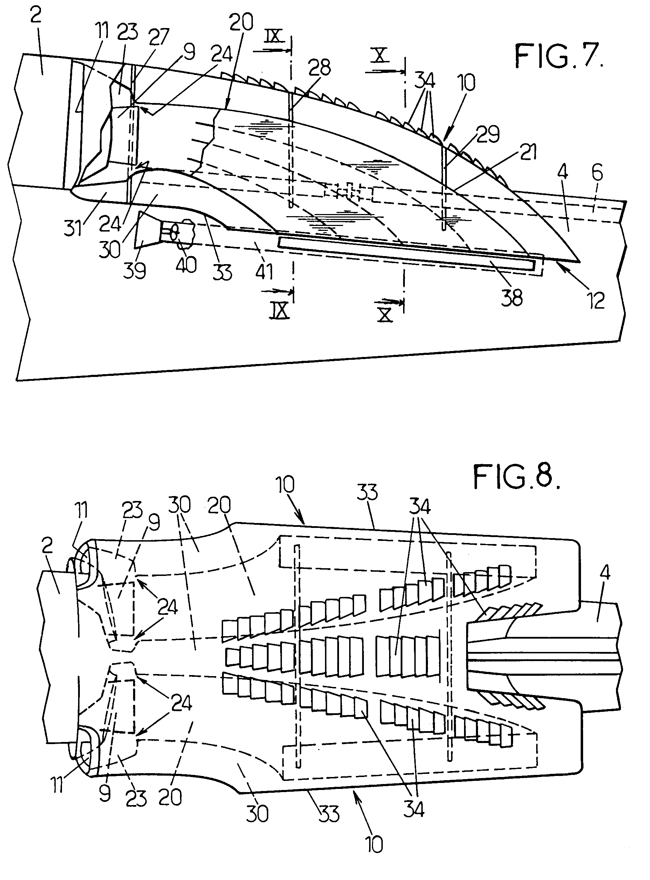

Les figures 7 à 10 représentent une variante de l'hélicoptère des figures 1 à 6. Cette variante présente de nombreux points communs avec la forme de réalisation des figures 1 à 6, de sorte qu'elle ne sera décrite en détail et que seules les différences par rapport à la forme de réalisation des figures 1 à 6 seront explicitées ici.

Dans la variante des figures 7 à 10, les deux ensembles dilueurs-déviateurs de jet 10 sont disposés au-dessus de la poutre de queue 4 de part et d'autre de celle-ci, au lieu de la traverser.

Cette disposition présente l'avantage de permettre aisément l'installation des ensembles dilueurs-déviateurs de jet 10 sur un hélicoptère existant.

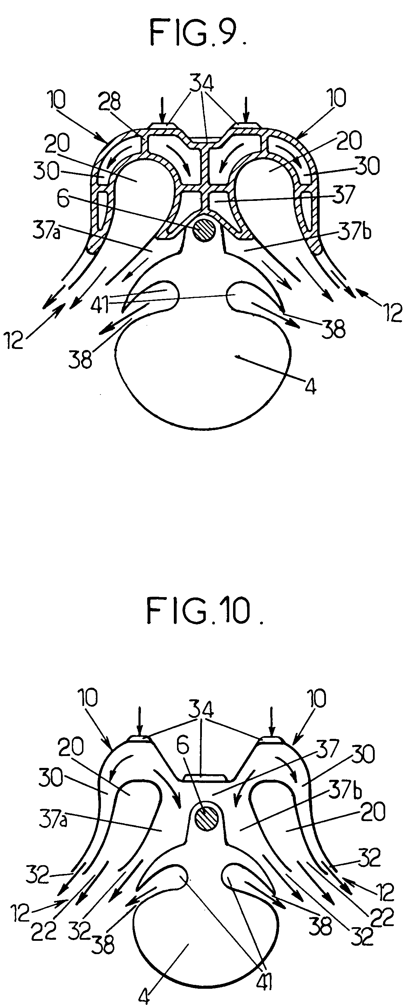

Comme on peut le voir en particulier sur les figures 9 et 10, les deux espaces intermédiaires 30 correspondant aux deux conduits d'éjection 20 comportent donc une partie centrale commune 37 qui est située uniquement au-dessus de la poutre de queue 4, mais cette zone centrale 37 est scindée en deux zones latérales 37a, 37b en dessous du niveau supérieur de la poutre de queue, les zones 37a et 37b étant disposées de part et d'autre de la poutre de queue.

La sortie 12 de chaque dilueur-déviateur de jet est disposée latéralement par rapport à la poutre de queue 4, et pour éviter que le flux sortant des conduits d'éjection ne chauffe cette poutre de queue, on a recours aux dispositions suivantes :
- les deux conduits d'éjection sont orientés de façon à écarter de la poutre de queue le flux sortant desdits conduits d'éjection,
- le flux d'air frais sortant des zones 37a et 37b de l'espace intermédiaire a tendance à décoller de la poutre de queue le flux sortant des conduits d'éjection, ce qui empêche les transferts thermiques des gaz chauds sortant des conduits d'éjection vers la poutre de queue,
- et, éventuellement, la poutre de queue peut inclure une fente de soufflage latérale 38 sur chacun de ses côtés au niveau de la sortie 22 de chaque conduit d'éjection et sur toute la longueur de cette sortie 22, ou éventuellement sur toute la longueur de la sortie 12, cette fente de soufflage latérale 38 étant reliée à une entrée d'air 39 par l'intermédiaire d'un ventilateur 40 et d'un canal 41 de façon à souffler de l'air vers l'extérieur de la poutre de queue, ce qui écarte encore de ladite poutre de queue le flux de gaz chaud sortant de chaque conduit d'éjection.

Le ventilateur 40 peut éventuellement être un ventilateur d'extraction de filtre à sable de l'hélicoptère.

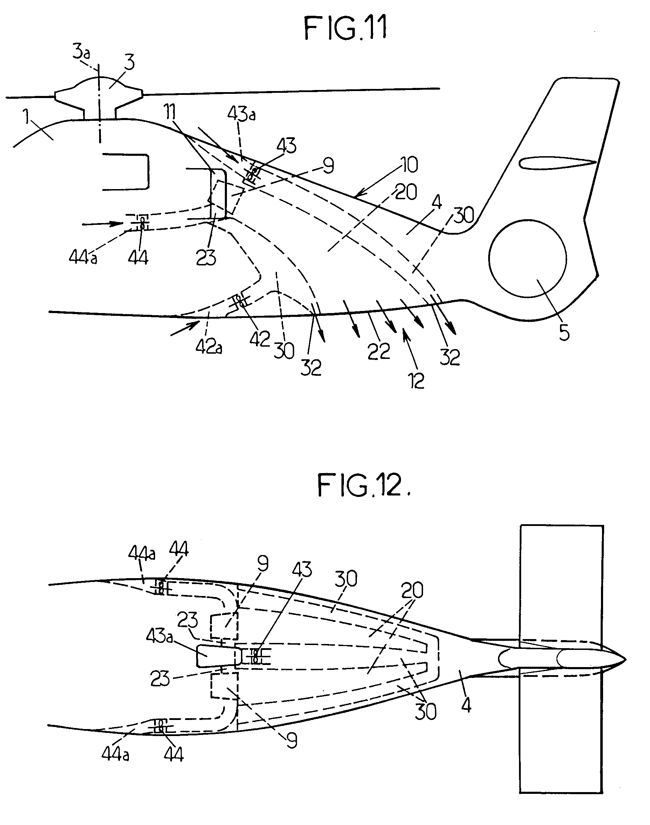

Dans la variante représentée schématiquement sur les figures 11 et 12, l'espace intermédiaire 30 de chaque ensemble dilueur-déviateur de jet 10 reçoit de l'air frais propulsé par deux ventilateurs 42, 43 communiquant respectivement avec des entrées d'air 42a, 43a au-dessus et au-dessous du fuselage de l'hélicoptère, bien qu'un nombre différent de ventilateurs et des emplacements différents de prises d'air puissent être envisagés.

De plus, pour chaque tuyère 9, un ventilateur supplémentaire 44 peut propulser de l'air frais vers la volute 23 qui entoure cette tuyère 9, à partir d'une entrée d'air 44a latérale.

Un ou plusieurs des ventilateurs 42, 43, 44 peuvent éventuellement être constitués par les ventilateurs d'extraction de filtre à sable de l'hélicoptère.

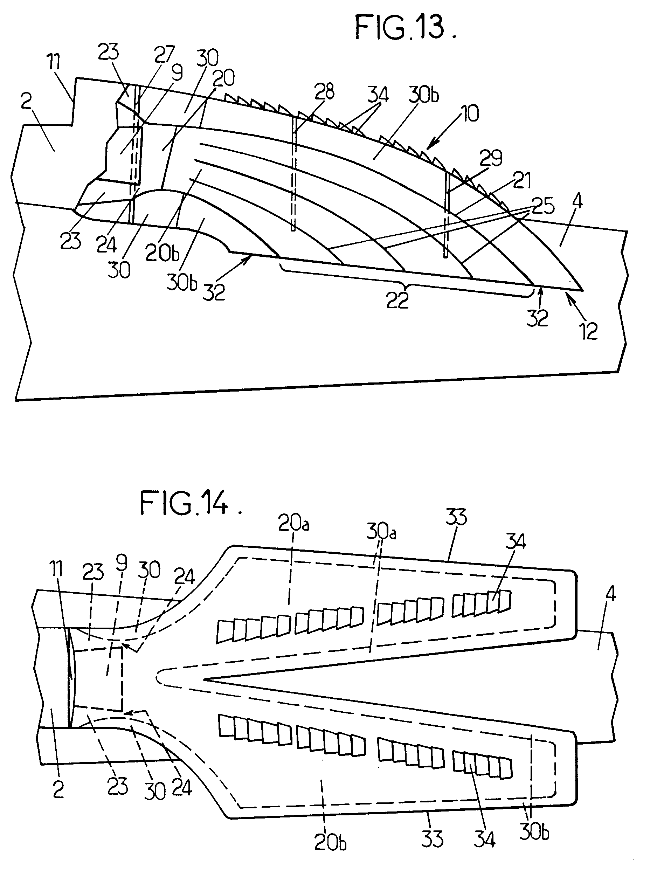

Dans la variante des figures 13 et 14, l'hélicoptère comporte un unique moteur à turbine à gaz 2, et ce moteur à turbine à gaz est doté d'un dilueur-déviateur de jet 10 qui comporte une entrée d'air unique 11 située au-dessus de la tuyère 9 du moteur à gaz, un conduit d'éjection 20 qui présente comme précédemment une volute 23 qui entoure la tuyère 9, un passage étranglé annulaire 24 autour de l'extrémité d'aval de la tuyère 9, le conduit 20 étant d'abord unitaire immédiatement en aval de la tuyère 9 puis se subdivisant en deux portions latérales 20a, 20b disposées de part et d'autre de la poutre de queue comme les deux conduits d'éjection 20 des figures 7 à 10.

L'espace intermédiaire 30 qui entoure le conduit d'éjection est lui-même unitaire immédiatement en aval de la tuyère 9, puis se subdivise en deux portions latérales 30a, 30b qui entourent chacune des portions latérales 20a, 20b du conduit d'éjection.

En variante, les deux portions latérales 20a, 20b du conduit d'éjection et les portions latérales 30a, 30b de l'espace intermédiaire pourraient pénétrer à l'intérieur de la poutre de queue au lieu de passer autour.

Dans ce dernier cas, les portions latérales 20a, 20b du conduit d'éjection seraient disposées de part et d'autre de l'arbre de transmission.

## Revendications

1. Hélicoptère comportant au moins un moteur à turbine à gaz (2) qui entraîne au moins un rotor principal et qui présente une tuyère (9) pour l'échappement des gaz de combustion, un conduit d'éjection (20) entourant ladite tuyère et s'étendant vers l'aval au-delà de cette tuyère en formant un coude (21) vers le bas qui débouche dans l'atmosphère par au moins une sortie (22) ouverte essentiellement vers le bas, le conduit d'éjection (20) comportant au moins une entrée d'air (11) qui communique avec l'atmosphère et qui est conformée pour aspirer de l'air ambiant dans le conduit d'éjection sous l'effet des gaz de combustion sortant de la tuyère (9),
**caractérisé en ce que**, vu horizontalement depuis l'extérieur de l'hélicoptère ou depuis une position située au-dessus de l'hélicoptère, le conduit d'éjection (20) est masqué entièrement par un carénage (33) séparé dudit conduit d'éjection par un espace intermédiaire (30) libre, des moyens d'alimentation en air (34; 42, 43) étant prévus pour créer un flux d'air ambiant, y compris en vol stationnaire, le long dudit espace intermédiaire (30) jusqu'à une sortie (32) qui est située au niveau de la sortie (22) du conduit d'éjection et qui est également ouverte essentiellement vers le bas.

2. Hélicoptère selon la revendication 1, dans lequel l'espace intermédiaire (30) susmentionné entoure le conduit d'éjection (20), lequel n'est soutenu que localement par des organes de support (27, 28, 29) qui traversent l'espace intermédiaire sensiblement sans interférer avec le flux d'air ambiant qui parcourt cet espace intermédiaire.

3. Hélicoptère selon l'une quelconque des revendications 1 et 2, dans lequel le carénage (33) qui masque le conduit d'éjection comporte une partie exposée à l'air ambiant soufflé vers le bas par le rotor principal (3), et dans lequel les moyens d'alimentation en air de l'espace intermédiaire comportent des ouïes (34) ménagées dans ladite partie du carénage exposée à l'air ambiant soufflé par le rotor principal, ces ouïes étant conformées pour faire entrer dans l'espace intermédiaire une partie dudit air ambiant soufflé par le rotor principal.

4. Hélicoptère selon la revendication 3, dans lequel chaque ouïe (34) comporte une fente (35) ménagée dans le carénage (33) selon une direction longitudinale sensiblement transversale par rapport à l'écoulement le long dudit carénage de l'air ambiant soufflé par le rotor principal, chaque fente (35) comportant un bord d'aval qui est relié à un déflecteur (36) tout le long de ladite fente, ce déflecteur s'étendant vers l'amont en s'éloignant du carénage (33) vers l'extérieur et en recouvrant toute la fente (35), chaque ouïe (34) constituant ainsi une chicane qui empêche une vision directe de la tuyère (9) et du conduit d'éjection (20) depuis l'extérieur.

5. Hélicoptère selon la revendication 4, dans lequel les ouïes (34) sont ouvertes vers l'avant dudit hélicoptère.

6. Hélicoptère selon l'une quelconque des revendications précédentes, dans lequel les moyens d'alimentation en air de l'espace intermédiaire (30) comportent au moins un ventilateur (42, 43) pour propulser de l'air ambiant dans ledit espace intermédiaire.

7. Hélicoptère selon l'une quelconque des revendications précédentes, dans lequel l'entrée d'air (11) du conduit d'éjection comporte des ailettes (11a) transversales qui empêchent une vision directe vers l'intérieur de ladite entrée d'air.

8. Hélicoptère selon l'une quelconque des revendications précédentes, dans lequel le conduit d'éjection comporte intérieurement des déflecteurs pour contrôler la direction du flux sortant dudit conduit d'éjection.

9. Hélicoptère selon l'une quelconque des revendications précédentes, comportant une cellule principale (1) qui inclut deux moteurs à turbine à gaz (2) juxtaposés et qui se prolonge vers l'arrière par une poutre de queue (4) s'étendant jusqu'à un rotor anticouple (5), ce rotor anticouple étant entraîné en rotation par un arbre de transmission (6) qui s'étend longitudinalement à l'intérieur de la poutre de queue, l'hélicoptère comportant deux conduits d'éjection de part et d'autre de l'arbre de transmission.

10. Hélicoptère selon la revendication 9, dans lequel les deux conduits d'éjection (20) traversent la poutre de queue (4) et ont leur sortie (22) disposée sous ladite poutre de queue.

11. Hélicoptère selon la revendication 10, dans lequel les deux conduits d'éjection (20) sont entourés chacun par un espace intermédiaire (30) parcouru par un flux d'air ambiant, les deux espaces intermédiaires présentant une portion commune (37) dans toute leur zone comprise entre les deux conduits d'éjection, et la sortie (32) des deux espaces intermédiaires étant également commune entre les sorties (22) des deux conduits d'éjection.

12. Hélicoptère selon la revendication 9, dans lequel les deux conduits d'éjection (20) sont disposés à l'extérieur de la poutre de queue (4), de part et d'autre de celle-ci.

13. Hélicoptère selon la revendication 12, dans lequel les sorties (22) des deux conduits d'éjection (20) sont disposées latéralement par rapport à la poutre de queue (4), et dans lequel la poutre de queue comporte des moyens (38) de circulation forcée d'air ambiant disposés de part et d'autre de la poutre de queue au niveau des sorties (22) respectives des deux conduits d'éjection, pour éloigner de la poutre de queue le flux sortant des conduits d'éjection.

14. Hélicoptère selon l'une quelconque des revendications 1 à 8, comportant une cellule principale (1) qui inclut un moteur à turbine à gaz (2) unique et qui se prolonge vers l'arrière par une poutre de queue (4) s'étendant jusqu'à un rotor anticouple (5), ce rotor anticouple étant entraîné en rotation par un arbre de transmission (6) qui s'étend longitudinalement à l'intérieur de la poutre de queue, le conduit d'éjection (20) comportant une portion d'amont qui s'étend au-dessus de l'arbre de transmission et qui se prolonge vers l'arrière et vers le bas par deux portions d'aval (20a, 20b) disposées respectivement de part et d'autre de l'arbre de transmission (6).

15. Hélicoptère selon l'une quelconque des revendications précédentes, dans lequel la tuyère (9) est ondulée circonférentiellement en formant une pluralité de lobes (9a) qui s'étendent radialement.

16. Hélicoptère selon l'une quelconque des revendications précédentes, comportant en outre des moyens (44) pour forcer la circulation de l'air ambiant vers le conduit d'éjection.

## Claims

1. A helicopter including at least one gas turbine engine (2) which drives at least one main rotor and which has a nozzle (9) for expelling the combustion gases, an exhaust pipe (20) surrounding said nozzle and extending downstream beyond this nozzle, thereby forming a downward-pointing elbow (21) which opens to the atmosphere via at least one outlet (22) open essentially downward, the exhaust pipe (20) including at least one air intake (11) which communicates with the atmosphere and which is shaped to draw ambient air into the exhaust pipe under the effect of the combustion gases leaving the nozzle (9), characterized in that, viewed horizontally from the outside of the helicopter or from a position situated above the helicopter, the exhaust pipe (20) is completely concealed by a cowling (33) separated from said exhaust pipe by an empty intermediate space (30), air supply means (34; 42; 43) being provided to create a flow of ambient air, including during hovering flight, along said intermediate space (30) as far as an outlet (32) which is situated even with the outlet (22) from the exhaust pipe and which is also open essentially downward.

2. The helicopter as claimed in claim 1, in which the above-mentioned intermediate space (30) surrounds the exhaust pipe (20), which is supported only locally by support members (27, 28, 29) which pass through the intermediate space substantially without interfering with the flow of ambient air which travels through this intermediate space.

3. The helicopter as claimed in anyone of claims 1 and 2, in which the cowling (33) which conceals the exhaust pipe includes a part which is exposed to the ambient air blown downward by the main rotor (3), and in which the means for supplying the intermediate space with air include vents (34) formed in said part of the cowling which is exposed to the ambient air blown by the main rotor, these vents being shaped so as to cause some of said ambient air blown by the main rotor to enter the intermediate space.

4. The helicopter as claimed in claim 3, in which each vent (34) includes a slit (35) made in the cowling (33) in a longitudinal direction, substantially transverse to the flow along said cowling of the ambient air blown by the main rotor, each slit (35) including a downstream edge which is connected to a deflector (36) along the entire length of said slit, this deflector extending upstream, outward and away from the cowling (33) and covering the entire slit (35), each vent (34) thus constituting a baffle which prevents the nozzle (9) and the exhaust pipe (20) from being seen directly from the outside.

5. The helicopter as claimed in claim 4, in which the vents (34) are open toward the front of said helicopter.

6. The helicopter as claimed in anyone of the preceding claims, in which the means for supplying the intermediate space (30) with air include at least one fan (42, 43) for propelling ambient air into said intermediate space.

7. The helicopter as claimed in anyone of the preceding claims, in which the air intake (11) of the exhaust pipe includes transverse fins (11a) which prevent a direct view of the inside of said air intake.

8. The helicopter as claimed in anyone of the preceding claims, in which the exhaust pipe internally includes deflectors for controlling the direction of the flow leaving said exhaust pipe.

9. The helicopter as claimed in anyone of the preceding claims, including a main airframe (1) which includes two juxtaposed gas turbine engines (2) and which is extended toward the rear via a tail boom (4) extending as far as a countertorque rotor (5), this countertorque rotor being driven in rotation by a transmission shaft (6) which extends longitudinally inside the tail boom, the helicopter including two exhaust pipes on either side of the transmission shaft.

10. The helicopter as claimed in claim 9, in which the two exhaust pipes (20) pass through the tail boom (4) and have their outlet (22) arranged under said tail boom.

11. The helicopter as claimed in claim 10, in which the two exhaust pipes (20) are each surrounded by an intermediate space (30) through which a flow of ambient air travels, the two intermediate spaces having a common portion (37) in the whole of their region lying between the two exhaust pipes, and the outlet (32) of the two intermediate spaces also being common to the outlets (22) of both exhaust pipes.

12. The helicopter as claimed in claim 9, in which the two exhaust pipes (20) are arranged outside the tail boom (4), on either side thereof.

13. The helicopter as claimed in claim 12, in which the outlets (22) of the two exhaust pipes (20) are arranged laterally with respect to the tail boom (4) and in which the tail boom includes means (38) for the forced circulation of ambient air, these means being arranged on either side of the tail boom level with the respective outlets (22) of the two exhaust pipes, so as to direct the flow leaving the exhaust pipes away from the tail boom.

14. The helicopter as claimed in anyone of claims 1-8, including a main airframe (1) which includes a single gas turbine engine (2) and which is extended toward the rear via a tail boom (4) extending as far as a countertorque rotor, this countertorque rotor (5) being driven in rotation by a transmission shaft (6) which extends longitudinally inside the tail boom, the exhaust pipe (20) including an upstream portion which extends above the transmission shaft and which is extended rearwards and downwards by two downstream portions (20a, 20b) located respectively on either side of the transmission shaft (6).

15. The helicopter as claimed in anyone of the preceding claims, in which the nozzle (9) is circumferentially corrugated, forming a plurality of lobes (9a) which extend radially.

16. The helicopter as claimed in anyone of the preceding claims, further including means (44) for forcing ambient air to circulate toward the exhaust pipe.

## Patentansprüche

1. Hubschrauber mit mindestens einem Gasturbinenmotor (2), der wenigstens einen Hauptrotor antreibt und eine Düse (9) zum Auslassen von Verbrennungsgasen aufweist, wobei ein Ausstoßkanal (20) die Düse umschließt und sich strömungsabwärts jenseits dieser Düse zur Unterseite hin unter Bildung einer Krümmung (21) erstreckt, die durch mindestens einen im wesentlichen nach unten hin offenen Ausgang (22) in die Atmosphäre einmündet, wobei der Ausstoßkanal (20) zumindest einen Lufteinlaß (11) aufweist, der mit der Atmosphäre in Verbindung steht und der für ein Ansaugen der Umgebungsluft in den Ausstoßkanal unter der Einwirkung der aus der Düse (9) austretenden Verbrennungsgase ausgelegt ist, **dadurch gekennzeichnet,** daß bei horizontaler Betrachtung von außerhalb des Hubschraubers oder von einer oberhalb des Hubschraubers gelegenen Position der Ausstoßkanal (20) völlig mit einer vom Ausstoßkanal durch einen freien Zwischenraum (30) getrennten Verkleidung (33) abgedeckt ist, wobei Luftzuführungsmittel (34; 42, 43) zur Schaffung eines auch beim stationären Flug stattfindenden Umgebungsluftflusses entlang dem Zwischenraum (30) bis zu einem Ausgang (32) vorgesehen sind, der in Höhe des Ausgangs (22) des Ausstoßkanals liegt und der auch im wesentlichen nach unten hin offen ist.

2. Hubschrauber nach Anspruch 1, bei dem der vorher erwähnte Zwischenraum (30) den Ausstoßkanal (20) umschließt, wobei dieser nur örtlich durch Trägerorgane (27, 28, 29) gestützt ist, die den Zwischenraum im wesentlichen ohne Störung des diesen Zwischenraum durchströmenden Umgebungsluftflusses durchqueren.

3. Hubschrauber nach einem der Ansprüche 1 und 2, bei dem die den Ausstoßkanal abdeckende Verkleidung (33) ein Teil enthält, das der durch den Hauptrotor (3) nach unten hin geblasenen Umgebungsluft ausgesetzt ist, und bei dem die Luftzuführungsmittel des Zwischenraums Einlaßöffnungen (34) aufweisen, die in dem Teil der Verkleidung vorgesehen sind, welcher der durch den Hauptrotor verblasenen Umgebungsluft ausgesetzt ist, wobei diese Einlaßöffnungen eingerichtet sind, um in den Zwischenraum einen Teil der durch den Hauptrotor verblasenen Umgebungsluft eintreten zu lassen.

4. Hubschrauber nach Anspruch 3, bei dem jede Einlaßöffnung (34) einen Schlitz (35) aufweist, der sich in der Verkleidung (33) mit einer Längsrichtung erstreckt, die in bezug auf den Verlauf der durch den Rotor verblasenen Umgebungsluft entlang der Verkleidung im wesentlichen quer ist, wobei jeder Schlitz (35) eine strömungsabwärts gelegene Kante enthält, die mit einem Abweiser (36) entlang der ganzen Länge des Schlitzes verbunden ist, wobei sich dieser Abweiser strömungsaufwärts erstreckt, indem er sich von der Verkleidung (33) nach außen hin entfernt und den ganzen Schlitz (35) überdeckt, wobei jede Einlaßöffnung (34) somit ein Hindernis bildet, das eine direkte Sicht der Düse (9) und des Ausstoßkanals (20) von außen her verhindert.

5. Hubschrauber nach Anspruch 4, bei dem die Einlaßöffnungen (34) zur Vorderseite des Hubschraubers hin offen sind.

6. Hubschrauber nach einem der vorhergehenden Ansprüche, bei dem die Luftzuführungsmittel des Zwischenraums (30) wenigstens einen Lüfter (42, 43) zum Vortreiben der Umgebungsluft im Zwischenraum enthalten.

7. Hubschrauber nach einem der vorhergehenden Ansprüche, bei dem der Lufteinlaß (11) des Ausstoßkanals Querflügel (11a) enthält, die eine direkte Sicht zum Inneren des Lufteinlasses verhindern.

8. Hubschrauber nach einem der vorhergehenden Ansprüche, bei dem der Ausstoßkanal innen Abweiser zur Kontrolle der Richtung des aus dem Ausstoßkanal austretenden Flusses enthält.

9. Hubschrauber nach einem der vorhergehenden Ansprüche, der eine Hauptzelle (1) aufweist, die zwei nebeneinander liegende Gasturbinenmotoren (2) einschließt und die sich nach hinten durch einen sich bis zu einem Gegendrehmoment-Rotor (5) erstreckenden Heckträger (4) fortsetzt, wobei dieser Gegendrehmoment-Rotor durch eine Kraftübertragungswelle (6) drehangetrieben wird, die sich innerhalb des Heckträgers in Längsrichtung erstreckt, wobei der Hubschrauber zwei Ausstoßkanäle beiderseits der Kraftübertragungswelle aufweist.

10. Hubschrauber nach Anspruch 9, bei dem die beiden Ausstoßkanäle (20) den Heckträger (4) durchlaufen und ihr Ausgang (22) unterhalb des Heckträgers angeordnet ist.

11. Hubschrauber nach Anspruch 10, bei dem die beiden Ausstoßkanäle (20) jeweils durch einen von einem Umgebungsluftfluß durchströmten Zwischenraum (30) umschlossen sind, wobei die beiden Zwischenräume einen gemeinsamen Teil (37) in ihrer ganzen zwischen den beiden Ausstoßkanälen enthaltenen Zone aufweisen und zwischen den Ausgängen (22) der beiden Ausstoßkanäle der Ausgang (32) der beiden Zwischenräume auch gemeinsam ist.

12. Hubschrauber nach Anspruch 9, bei dem die beiden Ausstoßkanäle (20) außerhalb des Heckträgers (4) beiderseits desselben angeordnet sind.

13. Hubschrauber nach Anspruch 12, bei dem die Ausgänge (22) der beiden Ausstoßkanäle (20) seitlich in bezug auf den Heckträger (4) angeordnet sind und bei dem der Heckträger Mittel (38) zur erzwungenen Umgebungsluftzirkulation enthält, die beiderseits des Heckträgers in Höhe der jeweiligen Ausgänge (22) der beiden Ausstoßkanäle angeordnet sind, um den aus den Ausstoßkanälen austretenden Fluß vom Heckträger fernzuhalten.

14. Hubschrauber nach einem der Ansprüche 1 bis 8, der eine Hauptzelle (1) aufweist, die einen einzigen Gasturbinenmotor (2) einschließt und die sich nach hinten durch einen sich bis zu einem Gegendrehmoment-Rotor (5) erstreckenden Heckträger (4) fortsetzt, wobei dieser Gegendrehmoment-Rotor über eine sich innerhalb des Heckträgers in Längsrichtung erstreckende Kraftübertragungswelle (6) drehangetrieben wird, wobei der Ausstoßkanal (20) einen strömungsaufwärts gelegenen Teil enthält, der sich oberhalb der Kraftübertragungswelle erstreckt und der sich nach hinten und nach unten durch zwei strömungsabwärts gelegene Teile (20a, 20b) fortsetzt, die auf der einen Seite bzw. auf der anderen Seite der Kraftübertragungswelle (6) angeordnet sind.

15. Hubschrauber nach einem der vorhergehenden Ansprüche, bei dem die Düse (9) in Umfangsrichtung geriffelt ist, wobei eine Vielzahl von sich radial erstreckenden Lappen (9a) gebildet wird.

16. Hubschrauber nach einem der vorhergehenden Ansprüche, der außerdem Mittel (44) aufweist, welche die Umgebungsluftzirkulation zum Ausstoßkanal hin erzwingen.
